(19) Europäisches Patentamt
European Patent Office
Office européen des brevets

(11) **EP 2 424 242 A1**

(12) **EUROPEAN PATENT APPLICATION**

(43) Date of publication:
**29.02.2012 Bulletin 2012/09**

(51) Int Cl.:
**H04N 7/26** *(2006.01)*

(21) Application number: **10305905.1**

(22) Date of filing: **23.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Thomson Licensing
92130 Issy-les-Moulineaux (FR)**

(72) Inventors:
• **Lopez, Patrick
35450, Livré sur Changeon (FR)**

• **Kerbiriou, Paul
35235, Throrigne Fouillard (FR)**
• **Bureller, Olivier
35510, Cesson Sevigne (FR)**
• **Viellard, Thierry
35410, Ossé (FR)**
• **Boisson, Guillaume
35137, Pleumeleuc (FR)**

(74) Representative: **Streit, Arend
Deutsche Thomson OHG
European Patent Operations
Karl-Wiechert-Allee 74
30625 Hannover (DE)**

(54) **Method for compress-encoding signals, method for decompress-decoding signals, corresponding devices and storage medium carrying compress-encoded signals**

(57)     A method for compress-encoding signals using a compress-encoder specified for an input bit word length is described.

The described method comprises determining a minimum and a maximum of the signals, and using the minimum signal for determining an offset. Then, each signal is diminished by the determined offset, and the diminished signals are converted to binary. The method comprises determining a bit shift being a maximum of Zero and a number of bits by which the binary represented diminished maximum signal exceeds the input bit word length, and modifying each binary representation by right shifting according to the determined bit shift without shifting in bits to the left. Finally, the compress-encoder is used for compress-encoding the modified binary representations and at least one further binary representation representative of information allowing for determining the offset and the bit shift.

The diminishing by the offset has the effect that the lesser bits are discarded due to right shifting which results in less loss on precision.

Fig. 3

EP 2 424 242 A1

**Description**

TECHNICAL FIELD

The invention is related to compress-encoding/decompress-decoding.

BACKGROUND OF THE INVENTION

Encoder for compress-encoding are commonly specified for an input bit word length $k$, e.g. for an input bit word length of $k$=8 bits.

For using such encoder for compress-encoding of signals represented on binary words of a length m longer than the input bit length $k$ of the encoder, $m>k$, the binary words are fitted the input word length of the encoder by chopping off and discarding a respective number $(m\text{-}k)$ of least significant bits (LSB) of the binary words and encoding only the remaining $k$ most significant bits (MSB) of the binary words. Differently said, the binary words are right shifted by the respective number without shifting in bits to the left.

SUMMARY OF THE INVENTION

The invention is concerned with the problem that right shifting results in a loss on precision and reduced complexity.

The inventors recognized that precision and complexity can be preserved better if bit shifting is made conditional on a minimum of the signals.

Therefore, the inventors propose a method for compress-encoding signals according to claim 1 and a method for decompress-decoding signals according to claim 2. The inventors further propose a device for compress-encoding signals according to claim 3 and a device for decompress-decoding signals according to claim 3. And, a storage medium according to claim 11 is proposed.

The inventors recognized that right shift has to take place only if length of a binary representation of a dynamic range of the signals between a minimum of the signals and a maximum of the signals exceeds the input bit word length $k$ of the encoder. In case that the length of the binary representation of the dynamic range of the signals does not exceed the input bit length $k$ of the encoder the signal can be diminished by an offset. The offset being determined using a minimum of the signals. Then, the diminished signals can be encoded without impairing precision or complexity wherein said offset is encoded as side information.

Even if the length of the binary representation of the dynamic range of the signals exceeds the input bit length $k$ of the encoder, the loss of precision can be reduced. That is, after diminishing the signals the required bit shift is smaller, likely, i.e. less LSB need to be discarded in order to fit diminished signals to the encoder's input bit word length than needed to be discarded for fitting the undiminished signals to the encoder's input bit word length.

As the side information is encoded using the encoder, there is an embodiment where each of the signals is at most as large as an upper limit signal, and the offset is determined as a minimum of the minimum signal and a default offset. In this embodiment, the default offset is a largest signal representable on a bit word of the input bit word length and the upper limit signal is a largest signal representable on a bit word of twice the input bit word length. This ensures that the offset and the bit shift discarded can each be binary represented by bit words of at most the input bit word length.

In another embodiment, the side information represents at least one of the offset and the bit shift differentially with respect to previously encoded signals.

In a further embodiment, the modified binary representations of the diminished signals are rounded in dependency on a respective most significant one of the bits discarded due to right shifting.

The features of further advantageous embodiments are specified in the dependent claims and are herewith incorporated into the description.

BRIEF DESCRIPTION OF THE DRAWINGS

Exemplary embodiments of the invention are illustrated in the drawings and are explained in more detail in the following description. The exemplary embodiments are explained only for elucidating the invention, but not limiting the invention's disclosure or the invention's scope which is defined in the claims.

In the figures:

Fig. 1    depicts an exemplary depth map on 16 bits;

Fig. 2    depicts an exemplary histogram of samples inside an example picture;

Fig. 3    depicts a flow chart of an exemplary embodiment of the invention; and

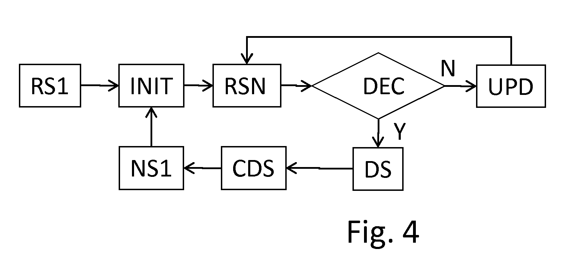

Fig. 4    depicts a flow chart of a further exemplary embodiment of the invention.

## EXEMPLARY EMBODIMENTS OF THE INVENTION

The invention may be realized on any electronic device comprising a processing device correspondingly adapted. For instance, the invention may be realized in a television, a mobile video phone, a personal computer, a digital still camera, a digital video camera, a navigation system or a car media system. Storage media carrying compress-encoded signals compress-encoded in accordance with the invention may be hard disk drives, solid state memory devices or other storage devices.

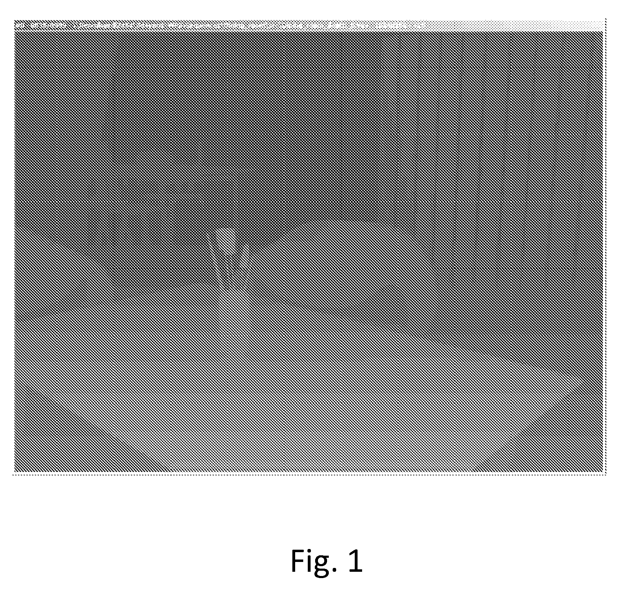

The invention is described exemplarily below using an example where depth data frames or depth maps associated with pictures grouped in groups of pictures (GOP) are determined with a precision of 10 bit but are to be compress-encoded with a precision of 8 bits. Such depth maps occur in layered depth coding (LDC) and MultiView Coding (MVC), for instance. An example of such depth map on 16 bit is depicted in Figure 1.

The solution proposed here consists in applying a negative offset on the depth data, i.e. diminishing each depth datum by the offset and to use a bit shift for right shifting the offset depth data after converting it to binary. The bit shift applied is then transmitted in the coded bitstream.

In order to save bits, it is advantageous to transmit the value of the offset and the bit shift information as limited as possible.

For instance, one value per GOP could be sufficient. In the case multicomponent are concerned, like a MVC, the information can be share by all views for a given GOP.

Or there are two or more sets of information per frame, for instance in the case the signal dynamic is very different between the top and the bottom of the frame.

Figure 1 depicts two exemplary cases of histogram corresponding to high dynamic and low dynamic content.

The "High dynamic" example case represents a depth map which contains saturated white level samples as well as mid-black samples.

At the opposite, the "low dynamic" example case represents a depth map with only black level samples.

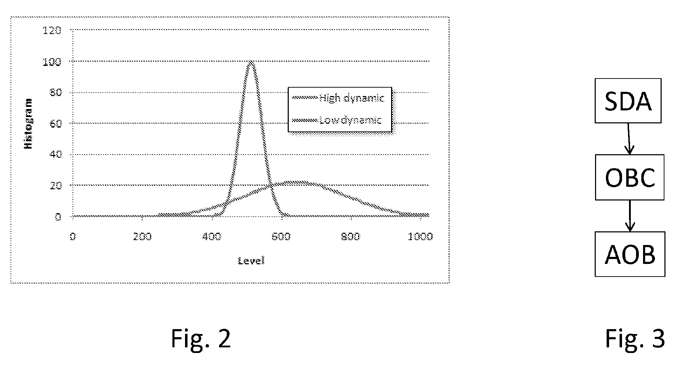

In the example of Figure 2, the principle consists in transforming 10 bit level to 8 bit level.

For the "Low dynamic" example case, signals vary between a minimum of 400 and a maximum of 620. The dynamic range is less than 256, i.e. it is binary representable on 8 bits. Thus it is feasible to apply an offset to the level in order to keep in the range [0; 255]. Offset value can be 400.

Thus in the "Low dynamic" example case, the modified value Y is derived from original value X by $Y=(X-400)$

For a "Medium dynamic" example case not depicted in Figure 2, signals vary between a minimum of 248 and a maximum of 548. Binary representation of the maximum requires 10 bits. Thus without offsetting, 2 bits have to be discarded. But, the dynamic range is only that high that the only 1 bit has to be discarded. The final dynamic will be then 0 to 150.

Thus in the "Medium dynamic" example case, the modified value Y is derived from original value X by $Y=(X-248)>>1$

For the "High dynamic" example case, signals vary between a minimum of 248 and a maximum of 1023. The dynamic range is more than 256, i.e. binary representation of the dynamic range requires 10 bits which binary representation of the maximum requires, also. Thus 2 bits have to be discarded, anyway. Then, an offset of zero can be chosen (or offsetting can be omitted) and only bit shifting can be applied. The final dynamic will be then 64 to 255.

Thus in the "High dynamic" example case, the modified value Y is derived from original value X by $Y=(X-0)>>2=X>>2$

The example depicted in figure 3 shows an embodiment which this technique consists in the following functions:

First, the signal dynamic is analysed (SDA). Based on the analysis, an offset and a bit shift are calculated (OBC). The calculated offset and bit shift is then applied to the signals (AOB).

The Offset and Binary shift values must be known at the receiver to reconstruct the samples correctly.

Thus, in embodiments where both parameters are used and where both parameters are allowed to vary, both parameters must be transmitted in the bitstream.

The construction process is given by:

$$Y = (X - OFFSET) >> BITSHIFT$$

Then, Y has the input bit length and can be compress-encoded and transmitted.

At receiver side, Y' is determined which denotes the received and decompress-decoded value. Then, the reconstructed decoded value X' is reconstructed according a reconstruction process is given by:

$$X' = (Y' \;<<\; BITSHIFT) \;+\; OFFSET$$

None, one, or both of bitshift and offset can be zero.

A reasonable grouping of depth map data into groups of signals can help to limit the dynamic range of signals to which a same offset is applied such that the dynamic range within each group can be binary represented on bit words of a target length and no discarding of bits is required.

That is, in an embodiment, signals are cumulated at encoder side until a new signal is received which would change the dynamic range of the previously accumulated signals if added to them such that more than the target bit amount is required for binary representation of the changed dynamic range. Then the previously accumulated signals are treated as a group of signals for which a common offset is determined. The previously accumulated signals in the group are all diminished by the common offset and the diminished signals are binary represented on the target bit amount without discarding bits. The encoder then cumulates signals of a next group of signals starting with the new received signal. In this embodiment, the maximum value and the minimum value of accumulated signals are monitored and updated by the encoder, if required due to current minimum exceeding the last signal or current maximum being exceeded by the last signal.

This embodiment of the method for compress-encoding signals using a compress-encoder specified for an input bit word length comprises that a first signal is received and stored (RS1) in a memory and that a current maximum and a current minimum are initialized (INIT) with the first signal. Then, a next signal is received and stored (RSN) in the memory and the minimum of the current minimum and the next signal is assigned to a preliminary current minimum as the maximum of the current maximum and the next signal is assigned to a preliminary current maximum.

If comparison (DEC) of a preliminary difference with a threshold yields that the preliminary difference does not exceed the threshold, the preliminary current minimum is assigned to current minimum (UPD), the preliminary current maximum is assigned to current maximum (UPD), and the method returns to receiving and storing a next signal (RBN) .

If the preliminary difference exceeds the threshold, a difference between the current maximum and the current minimum is determined and the stored signals except the next signal are diminished (DS) by said difference. Then, diminished signals are converted (CDS) to binary, the binary represented signals are input to the compress-encoder together with a binary representation of the difference and an offset indicator wherein the stored signals expect of the next signal are deleted from the memory. The next signal is then treated as a first signal (N1) and the method returns to initializing current minimum and current maximum (INIT).

In this embodiment, the preliminary difference between is a difference between the preliminary current maximum and the preliminary current minimum and the threshold exponentially proportional to the input bit word length.

In this embodiment, offset changes may occur anytime and an indicator code has to be provided allowing a receiver to determine that code preceding or following the indicator code does not represent a signal but an updated offset or change of the offset.

In another embodiment, offset and binary shift parameter are computed on a per picture basis. For instance, an initial offset and an initial bit shift are transmitted preceding each new GOP. Inside the GOP and preceding each picture updates are transmitted. Alternatively, offset and bit shift can be updated on a per region basis.

Once the decoder receives new offset or an offset update, the offset or the updated previous offset is applied on all samples of the decoded pictures until a new offset or offset update is received. The same applies for the bit shift.

This invention allows encoding a set of samples represented on more than k bit with an encoder specified for k bit wordlength with reduced loss on precision.

This technique can be applied on depth maps, allowing preservation of a sub-pixel precision on homogenous region.

**Claims**

1.   Method for compress-encoding signals using a compress-encoder specified for an input bit word length, said method comprising

> - determining (SCA) a minimum and a maximum of the signals,
> - using the minimum signal for determining (OBC) an offset,
> - diminishing (AOB) each signal by the determined offset,

- converting the diminished signals to binary,
- determining (OBC) a bit shift being a maximum of Zero and a number of bits by which the binary represented diminished maximum signal exceeds the input bit word length,
- modifying (AOB) each binary representation by right shifting according to the determined bit shift without shifting in bits to the left, and
- using the compress-encoder for compress-encoding the modified binary representations and at least one further binary representation representative of information allowing for determining the offset and the bit shift.

2.  Method of decompress-decoding signals, said method comprising

- receiving compress-encoded data comprising binary representations of signals and at least two further binary representation representative of information allowing for determining values an offset and a bit shift,
- decompress-decoding the data,
- using the binary representations for reconstructing the signals,
- using the further binary representation for reconstructing the information and using the information for determining the offset and the bit shift,
- using the bit shift for weighting the reconstructed signals by a weight proportional to two raised to the power of the bit shift, and increasing the weighted signals by the offset.

3.  Device for compress-encoding signals, the device comprising

- a compress-encoder specified for an input bit word length,
- means for minimum determination adapted for determining a minimum of the signals and for using the determined minimum signal for determining an offset,
- means for diminishing each signal by the offset,
- means for converting the diminished signals to binary,
- means for maximum determination adapted for determining a maximum of the diminished signals and for determining a bit shift as a maximum of Zero and a number of bits by which the binary represented diminished maximum signal exceeds the input bit word length,
- means for modifying binary signal representations by right shifting according to the determined bit shift without shifting in bits to the left, wherein
- the compress-encoder is adapted for encoding the modified binary signal representations and at least one further binary representations representative of information allowing for determining the offset and the bit shift.

4.  Device for decompress-decoding signals, comprising

- a receiver for receiving compress-encoded data comprising binary representations of signals and at least one further binary representation representative of information allowing for determining an offset and a bit shift,
- a decompress-decoder for decoding the data,
- means for using the binary representations for reconstructing the signals and for using the further binary representation for reconstructing the information,
- means for using the information for determining the offset and the bit shift,
- means for modifying the reconstructed signals by weighting each signal by a weight proportional to two raised to the power of the bit shift, and by further means for increasing each weighted signal by the offset.

5.  Method of one of claims 1-2 or device of one of claims 3-4, wherein the signals are comprised in a depth map or a disparity map.

6.  Method of one of claims 1-2 or device of one of claims 3-4, wherein the information allowing for determining the offset comprises an indication that the offset remained unchanged with respect to previously encoded signals.

7.  Method of one of claims 1-2 or device of one of claims 3-4, wherein the information allowing for determining the bit shift comprises an indication that the bit shift remained unchanged with respect to previously encoded signals.

8.  Method of one of claims 1-2 or device of one of claims 3-4, wherein the information allowing for determining the bit shift comprises an indication that the bit shift changed with respect to previously encoded signals as well as information allowing for determining by which amount the bit shift changed.

9. Method of one of claims 1-2 or device of one of claims 3-4, wherein the information allowing for determining the offset comprises an indication that the offset changed with respect to previously encoded signals as well as information allowing for determining by which amount the offset changed.

10. Method of claim 1 or device of claim 3, wherein each of the signals is at most as large as an upper limit signal, and the offset is determined as a minimum of the minimum signal and a default offset, the default offset being a largest signal representable on a bit word of the input bit word length and the upper limit signal being a largest signal representable on a bit word of twice the input bit word length.

11. Method of claim 1 or device of claim 3, wherein modifying each binary signal representation comprises rounding the respective modified binary signal representation in dependence on a most significant one of the bits discarded due to right shifting.

12. Storage medium carrying compress-encoded signals, said signal being compress-encoded according to claim 1.

Fig. 1

Fig. 2

Fig. 3

Fig. 4

Europäisches
Patentamt

European
Patent Office

Office européen
des brevets

# EUROPEAN SEARCH REPORT

Application Number

EP 10 30 5905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Scalar Quantization"<br>In: Khalid Sayood: "Introduction to Data Compression"<br>31 December 1996 (1996-12-31), Morgan Kaufmann , San Francisco, CA (US) ,<br>XP002605327<br>ISBN: 1-55860-346-8 , pages 169-193<br>* pages 178,188 *<br>----- | 1-11 | INV.<br>H04N7/26 |
| X | KONDO T ET AL: "ADAPTIVE DYNAMIC RANGE CODING SCHEME FOR FUTURE HDTV DIGITAL VTR"<br>PROCEEDINGS OF THE INTERNATIONAL WORKSHOP ON HDTV AND BEYOND, AMSTERDAM, ELSEVIER, NL,<br>vol. WORKSHOP 4,<br>4 September 1991 (1991-09-04), pages 43-50, XP000379937<br>* sections 3,4 *<br>----- | 1-11 | |
| A | SMOLIC ALJOSCHA ET AL: "An overview of available and emerging 3D video formats and depth enhanced stereo as efficient generic solution"<br>PICTURE CODING SYMPOSIUM 2009; CHICAGO, IL (US), 6 May 2009 (2009-05-06), XP030081895<br>* section 3 *<br>----- | 5-9 | TECHNICAL FIELDS SEARCHED (IPC)<br><br>H04N |
| A | "Text of ISO/IEC FDIS 23002-3 Representation of Auxiliary Video and Supplemental Information"<br>79. MPEG MEETING;15-1-2007 - 19-1-2007; MARRAKECH; (MOTION PICTURE EXPERT GROUP OR ISO/IEC JTC1/SC29/WG11),, no. N8768,<br>20 April 2007 (2007-04-20), XP030015262<br>* the whole document *<br>----- | 5 | |

The present search report has been drawn up for all claims

| Place of search | Date of completion of the search | Examiner |
|---|---|---|
| The Hague | 20 October 2010 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)